# EUROPEAN PATENT APPLICATION

(11) **EP 2 693 018 A1**
(43) Date of publication of application: **05.02.2014**
(21) Application number: 12765642.9
(22) Date of filing: 26.01.2012
(51) Int. Cl.: F02B 39/00, F01D 17/14

(54) **TURBOCHARGER**

(30) Priority: 31.03.2011 JP 2011081194
(71) Applicant: Mitsubishi Heavy Industries, Ltd., Tokyo 108-8215 (JP)
(72) Inventor: SHIRAISHI, Keiichi, Tokyo 108-8215 (JP); ITO, Yoshikazu, Tokyo 108-8215 (JP)
(74) Representative: HOFFMANN EITLE
(86) International application number: PCT/JP2012/051590
(87) International publication number: WO 2012/132523

(57) **Abstract**

Provided is a turbocharger that compresses combustion air in an internal combustion engine and that force-feeds the high-density air into a combustion chamber of the internal combustion engine. The turbocharger includes a turbine rotor blade that is rotationally driven by exhaust gas exhausted from the internal combustion engine; and a turbine nozzle (25) that guides the exhaust gas to the turbine rotor blade. The turbine nozzle (25) has, at an intermediate position in the radial direction, a partition member that divides the turbine nozzle (25); and an outer circumferential side (42b) of the partition member is inclined toward an inner circumferential side of the turbine nozzle (25) from the upstream side toward the downstream side of the exhaust gas that is guided to the turbine nozzle (25).

## Description

### {Technical Field}

The present invention relates to a turbocharger used in combination with, for example, a large internal combustion engine such as a ship internal combustion engine, a power-generation internal combustion engine, or the like.

### {Background Art}

Turbochargers are generally used to force-feed high-density combustion air into internal combustion engines. For such a turbocharger, as a method that uses a simple configuration, that also makes it possible to reduce the manufacturing cost and maintenance cost, and that makes it possible to enhance the turbine performance, for example, Patent Literature 1 discloses a method in which exhaust gas that is guided to a turbine nozzle is guided in the overall direction of the turbine nozzle in a divided manner.

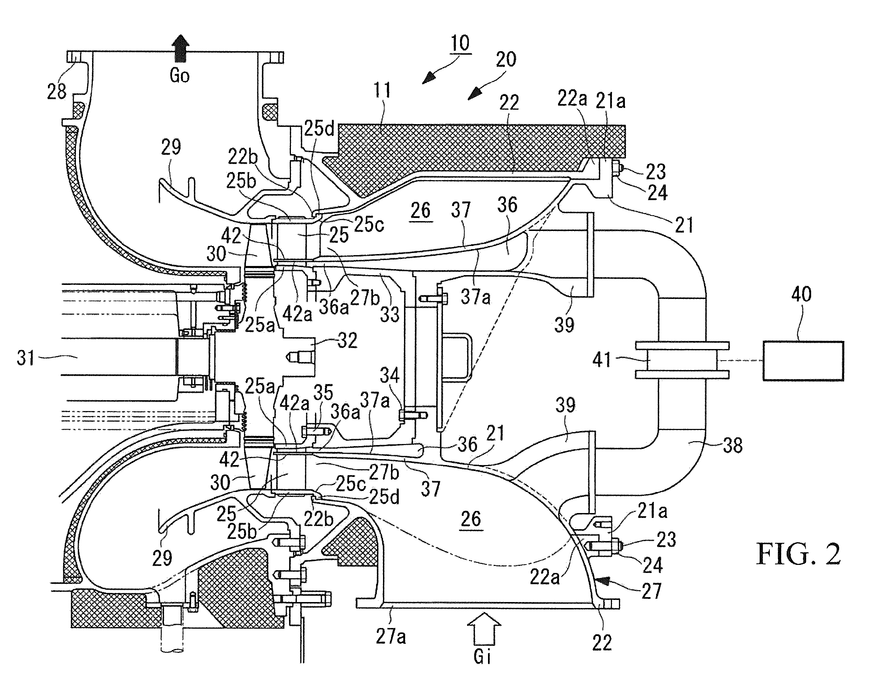

Fig. 2 shows a partial cross-sectional configuration diagram showing, in cross-section, an example internal configuration of a turbine 20 of a turbocharger 10 disclosed in Patent Literature 1. In Fig. 2, a partition wall 42 that divides the turbine nozzle 25 in a direction substantially parallel to a rotor shaft 31 is provided in a turbine nozzle 25 at an intermediate position with respect to the entirety thereof. Exhaust gas is guided from an exhaust gas channel 26 to a portion on the outer circumferential side of the turbine nozzle 25 relative to this partition wall 42, and exhaust gas from an exhaust gas channel 36 is guided to a portion on the inner circumferential side of the turbine nozzle 25 relative to the partition wall 42.

An exhaust gas pipe 38 that connects between a gas-inlet casing 27 and the exhaust gas channel 26 is connected to the exhaust gas channel 36, and the exhaust gas is guided by controlling the degree-of-opening of an open/close valve 41 provided in the exhaust gas pipe 38 in accordance with the load on the internal combustion engine (not shown).

Specifically, the structure here is such that, when the exhaust gas level exhausted from the internal combustion engine is low due to low-load operation of the internal combustion engine, the open/close valve 41 is set to the fully-closed state, thus guiding the exhaust gas only to the exhaust gas channel 26, and, when the exhaust gas level exhausted from the internal combustion engine is high due to high-load operation of the internal combustion engine, the open/close valve 41 is set to the fully-open state, thus guiding the exhaust gas to both the exhaust gas channel 26 and the exhaust gas channel 36.

### {Citation List}

### {Patent Literature}

{PTL 1} Japanese Unexamined Patent Application, Publication No. 2010-216468

### {Summary of Invention}

### {Technical Problem}

However, in the case of Fig. 2, when the exhaust gas is guided to the turbine nozzle 25 only from the exhaust gas channel 26 by setting the open/close valve 41 to the fully-closed state, the exhaust gas flows along the partition wall 42 provided in the turbine nozzle 25 toward the downstream side of the turbine nozzle 25. Because of this, there is a problem in that the exhaust gas led out from the turbine nozzle 25 is not guided to the entirety of the turbine rotor blades 30, and thus, the turbine efficiency is decreased as compared with a turbocharger in which the partition wall 42 is not provided in the turbine nozzle 25.

The present invention has been conceived in light of the above-described circumstances, and an object thereof is to provide a turbocharger that has a simple configuration and that is also capable of enhancing the turbine efficiency.

### {Solution to Problem}

In order to solve the above-described problems, the present invention provides the following solutions.

A turbocharger according to the present invention is a turbocharger that compresses combustion air in an internal combustion engine and that force-feeds the high-density air into a combustion chamber of the internal combustion engine, the turbocharger including a turbine rotor blade that is rotationally driven by exhaust gas exhausted from the internal combustion engine; and a turbine nozzle that guides the exhaust gas to the turbine rotor blade, wherein the turbine nozzle has, at an intermediate position in the radial direction, a partition member that divides the turbine nozzle; and an outer circumferential side of the partition member is inclined toward an inner circumferential side of the turbine nozzle from the upstream side toward the downstream side of the exhaust gas that is guided to the turbine nozzle.

In the turbine nozzle of the turbocharger to which the exhaust gas exhausted from the internal combustion engine is guided, the partition member is provided at the intermediate position in the radial direction thereof, and the outer circumferential side of this partition member is inclined toward the inner circumferential side of the turbine nozzle from the upstream side toward the downstream side of the exhaust gas that is guided to the turbine nozzle. Because of this, the exhaust gas flowing in the turbine nozzle on the radially outer side relative to the partition member is guided to the inner circumferential side of the turbine nozzle along the outer circumferential side of the partition member. By doing so, the exhaust gas led out from the turbine nozzle can be guided to the entirety of the turbine rotor blade. Therefore, the turbine efficiency can be enhanced as compared with the case in which the outer circumferential side of the partition member is not inclined.

Furthermore, because the exhaust gas can be guided to the entirety of the turbine rotor blade, the vibrational stress can be reduced as compared with the case in which the outer circumferential side of the partition member is not inclined. Therefore, the reliability of the turbocharger can be enhanced.

### {Advantageous Effects of Invention}

In the turbine nozzle of the turbocharger to which the exhaust gas exhausted from the internal combustion engine is guided, the partition member is provided at the intermediate position in the radial direction thereof, and the outer circumferential side of this partition member is inclined toward the inner circumferential side of the turbine nozzle from the upstream side toward the downstream side of the exhaust gas that is guided to the turbine nozzle. Because of this, the exhaust gas flowing in the turbine nozzle on the radially outer side relative to the partition member is guided to the inner circumferential side of the turbine nozzle along the outer circumferential side of the partition member. By doing so, the exhaust gas led out from the turbine nozzle can be guided to the entirety of the turbine rotor blades. Therefore, the turbine efficiency can be enhanced as compared with the case in which the outer circumferential side of the partition member is not inclined.

Furthermore, because the exhaust gas can be guided to the entirety of the turbine rotor blades, the vibrational stress can be reduced as compared with the case in which the outer circumferential side of the partition member is not inclined. Therefore, the reliability of the turbocharger can be enhanced.

### {Brief Description of Drawings}

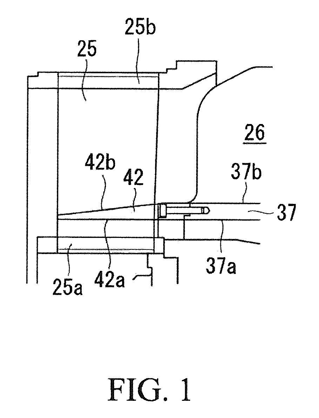

{Fig. 1} Fig. 1 is a partial enlarged view showing a longitudinal cross-section of a turbine nozzle and a partition plate of a turbocharger according to an embodiment of the present invention.
{Fig. 2} Fig. 2 is a partial cross-sectional configuration diagram showing, in cross-section, an example internal configuration on the turbine side of a conventional turbocharger.

### {Description of Embodiment}

The configuration of a turbocharger according to an embodiment of the present invention will be described below by using a partial enlarged view shown in Fig. 1, which shows a longitudinal cross-section of a turbine nozzle and a partition plate of the turbocharger according to the embodiment of the present invention, as well as a partial cross-sectional configuration diagram shown in Fig. 2, which shows the internal configuration on the turbine side of a conventional turbocharger.

Here, Fig. 2 is a partial cross-sectional configuration diagram showing, in cross-section, an example internal configuration on the turbine side of a turbocharger for a large internal combustion engine, in which a turbine and a compressor are coaxially provided.

A turbocharger (also referred to as an "exhaust-turbine supercharger") 10 compresses combustion air in an internal combustion engine (not shown) and force-feeds the high-density air into a combustion chamber (not shown) of the internal combustion engine. The turbocharger 10 is provided with turbine rotor blades 30 that are rotationally driven by exhaust gas exhausted from the internal combustion engine and a turbine nozzle 25 that guides the exhaust gas to the turbine rotor blades 30.

The turbocharger 10 is, for example, an axial turbine, configured so as to rotate a compressor (not shown) on the rotor shaft 31 by means of shaft output power obtained by expansion of the exhaust gas from the internal combustion engine introduced into a turbine 20, thus supplying compressed air that is compressed to a high density to the internal combustion engine.

Note that the portion indicated by cross-hatching in Fig. 2 is a thermal insulating material 11 provided for the purpose of thermal insulation and sound insulation.

The turbine 20 is provided with a gas-inlet casing 27 formed by joining together an inner casing 21 and outer casing 22, which are separate pieces, into a single piece with fastening means (for example, stud bolts 23 and nuts 24) so that a space formed between the inner casing 21 and the outer casing 22 serves as an exhaust gas channel (main exhaust gas channel) 26 that guides the exhaust gas to the turbine nozzle 25.

In the gas-inlet casing 27 having such a double structure, the exhaust gas channel 26 is formed over the entire circumference in the rotation direction of the turbine 20; the exhaust gas introduced from a gas inlet 27a of the gas-inlet casing 27, as indicated by an arrow Gi in Fig. 2, is guided to a gas outlet 27b by passing through the exhaust gas channel 26, and is subsequently exhausted to the exterior from an outlet of a gas-outlet casing 28, as indicated by an arrow Go in Fig. 2. In addition, the gas outlet 27b is provided in the form of an opening so as to supply the exhaust gas to the turbine nozzle 25 over the entire circumference in the rotation direction thereof.

Note that the reference sign 29 in Fig. 2 is a gas-guiding tube provided on the downstream side of the turbine rotor blades 30.

In addition, the turbine 20 is provided with a rotor disk 32 that is provided at one end of the rotor shaft 31 and the numerous turbine rotor blades 30 attached along the peripheral portion of this rotor disk 32 in the circumferential direction. The turbine rotor blades 30 are provided close to the downstream side of the turbine nozzle 25 that serves as the outlet thereof. Thus, the high-temperature exhaust gas jetted out from the turbine nozzle 25 is expanded by passing between the turbine rotor blades 30, thereby rotating the rotor disk 32 and the rotor shaft 31.

In the above-described gas-inlet casing 27 having the double structure, a first end of the inner casing 21 is secured and supported to a first end of the outer casing 22 by fastening means (for example, the stud bolts 23 and the nuts 24). Specifically, the inner casing 21 is set so that a flange surface 21a formed on the end of the casing at the right side of the drawings, which corresponds to the opposite side from the rotor disk 32, is aligned with a flange surface 22a of the outer casing 22 formed so as to face the flange surface 21a, and they are secured and supported to each other by fastening the fastening means (for example, the nuts 24) in this state. Both of these flange surfaces 21a and 22a are formed as surfaces perpendicular to the axial direction of the rotor shaft 31 that is rotated together with the rotor disk 32.

In addition, an inner circumferential portion at a second end (second-end inner circumferential side) of the inner casing 21 (end on the rotor disk 32 side) has a structure to which a hollow-cylindrical member 33 is connected (attached) via bolts 34, and an inner-circumference-side member 25a of a nozzle ring, which is a ring-shaped member that forms the turbine nozzle 25, is connected (attached) to an end surface (end surface on the rotor disk 32 side) of the member 33 via bolts 35. The ring-shaped member that forms the turbine nozzle 25, which is generally referred to as a nozzle ring, has a double-ring structure in which the ring members of the inner-circumference-side member 25a and the outer-circumference-side member 25b are connected by a partition wall (partition member) 42 so as to have a predetermined spacing therebetween.

On the other hand, in the outer-circumference-side member 25b of the nozzle ring that forms the turbine nozzle 25, the diameter of an inner circumferential surface 25c at an end thereof on the gas inlet side (gas outlet 27b side) increases in a trumpet shape. In addition, an end of the outer casing 22 on the rotor disk 32 side is provided with a step portion 22b that is formed so that the inner circumferential surface of the outer casing 22 is bent toward the rotor disk 32. Then, the configuration thereof is such that this step portion 22b and a step portion 25d provided at an end of the nozzle ring on the gas inlet side are engaged (fitted together) in the axial direction.

Furthermore, the gas-guiding tube 29 is connected to an end of the outer-circumference-side member 25b of the nozzle ring, which is located on the gas outlet side (turbine rotor blade 30 side). The connecting portion between the outer-circumference-side member 25b of the nozzle ring and the gas-guiding tube 29 has a recessed butt joint structure in which ends thereof are fitted to each other.

At the inner circumferential side (radially inner side) of the inner casing 21, an exhaust gas channel (sub exhaust gas channel) 36, which guides the exhaust gas diverted from an intermediate portion of the exhaust gas channel 26 to the inner circumferential side (radially inner side) of the turbine nozzle 25, is formed over the entire circumference of the turbine 20 in the rotation direction thereof. This exhaust gas channel 36 is provided on the inner circumferential side (radially inner side) of the exhaust gas channel 26, and the exhaust gas channel 26 and the exhaust gas channel 36 are partitioned by a partition wall 37 that forms the inner casing 21.

In addition, a flange 39 for connecting a pipe 38 is provided at an inner circumferential portion on the first end (first-end inner circumferential side) of the inner casing 21, and an open/close valve (for example, butterfly valve) 41, which is automatically opened/closed by means of a control device 40, is connected at an intermediate portion of the pipe 38. Thus, the exhaust gas diverted from the intermediate portion of the exhaust gas channel 26 is guided to the exhaust gas channel 36 by passing through the flange 39 and the pipe 38.

The turbine nozzle 25 has the partition wall 42 that divides the turbine nozzle 25 at an intermediate position thereof in the radial direction. Specifically, on the base side of the turbine nozzle 25 (inner-circumference-side member 25a side of the nozzle ring), an inner circumferential surface (surface on the radially inner side) 42a thereof forms a flat surface that is flush with an inner circumferential surface (surface on the radially inner side) 37a of the partition wall 37, and the partition wall 42 that forms a partition between the inner circumferential side and the outer circumferential side of the turbine nozzle 25 is also provided.

Fig. 1 is a partial enlarged view showing a longitudinal cross-section of the nozzle ring and the partition wall 42 of this embodiment.

As shown in Fig. 1, the inner circumferential surface 42a of the partition wall 42 forms the flat surface that is flush with the inner circumferential surface (surface on the radially inner side) 37a of the partition wall 37, and is also substantially parallel to the rotor shaft 31 (see Fig. 2), as well as the inner-circumference-side member 25a of the nozzle ring.

In addition, an outer circumferential surface (outer circumferential side) 42b of the partition wall 42 forms a surface that is flush with an outer circumferential surface (surface on the radially outer side) 37b of the partition wall 37 at the inlet side of the turbine nozzle 25 where the nozzle ring is formed. The outer circumferential surface 42b of the partition wall 42 has a tapered shape that is inclined toward the inner circumferential side of the turbine nozzle 25 from the upstream side toward the downstream side of the exhaust gas (from the right side to the left side in Fig. 1) that is guided from the exhaust gas channel 26 to the turbine nozzle 25 on the outer circumferential side thereof.

For the outer circumferential surface 42b of the partition wall 42 that has the tapered shape from the upstream side toward the downstream side of the exhaust gas that is guided to the turbine nozzle 25 on the outer circumferential side thereof, the tapering angle thereof is, for example, about 20°.

Note that, assuming that the position at the base of the turbine nozzle 25 (connecting position with the inner-circumference-side member 25a) is 0 % relative to the entirety thereof and that the position at the tip of the turbine nozzle 25 (connecting position with the outer-circumference-side member 25b) is 100 % relative to the entirety thereof, the position of the partition wall 42 on the upstream side of the exhaust gas is located at a position at about 10 % of the entire turbine nozzle 25.

The flow of the exhaust gas in the thus-configured turbocharger 10 (see Fig. 2) will now be described.

For example, when the load on the internal combustion engine is low, and thus, the exhaust gas level is low, the open/close valve 41 is set to the fully-closed state, and, when the load on the internal combustion engine is high, and thus, the exhaust gas level is high, the open/close valve 41 is set to the fully-open state.

Specifically, when the load on the internal combustion engine is low, and thus, the exhaust gas level is low, all of the exhaust gas guided from the gas inlet 27a of the gas-inlet casing 27 is guided to the gas outlet 27b by passing through the exhaust gas channel 26. The exhaust gas guided to the gas outlet 27b is guided from the gas outlet 27b to the outer circumferential side of the turbine nozzle 25 (into the space partitioned by the outer-circumference-side member 25b and the partition wall 42).

Because the outer circumferential surface 42b (see Fig. 1) of the partition wall 42 provided in the turbine nozzle 25 has the tapered shape that is inclined downward from the upstream side toward the downstream side of the exhaust gas that is guided to the turbine nozzle 25, the exhaust gas guided to the outer circumferential side of the turbine nozzle 25 flows along the tapered outer circumferential surface 42b of the partition wall 42 toward the inner circumferential side of the turbine nozzle 25. Because of this, the exhaust gas led out from the downstream side of the turbine nozzle 25 is guided across the entirety of the turbine rotor blades 30 (see Fig. 2). The exhaust gas guided across the entirety of the turbine rotor blades 30 in this way expands when passing between the turbine rotor blades 30, thus rotating the rotor disk 32 and the rotor shaft 31.

On the other hand, when the load on the internal combustion engine is high, and thus, the exhaust gas level is high, a major part (about 70 to 95 %) of the exhaust gas introduced from the gas inlet 27a of the gas-inlet casing 27 is guided to the gas outlet 27b by passing through the exhaust gas channel 26, and a portion (about 5 to 30 %) of the exhaust gas introduced from the gas inlet 27a of the gas-inlet casing 27 is guided to a gas outlet 36a by passing through the flange 39 and the pipe 38, the open/close valve 41, and the exhaust gas channel 36. The exhaust gas guided to the gas outlet 27b is guided from the gas outlet 27b, which is provided in the form of an opening over the entire circumference in the rotation direction, to the outer circumferential side of the turbine nozzle 25 (into the space partitioned by the outer-circumference-side member 25b and the partition wall 42).

Because the outer circumferential surface 42b (see Fig. 1) of the partition wall 42 provided in the turbine nozzle 25 has the tapered shape that is inclined downward toward the downstream side of the turbine nozzle 25, the exhaust gas guided to the outer circumferential side of the turbine nozzle 25 flows along the tapered outer circumferential surface 42b of the partition wall 42. Because of this, the exhaust gas led out from the downstream side of the turbine nozzle 25 is guided across the entirety of the turbine rotor blades 30 (see Fig. 2). The exhaust gas guided across the entirety of the turbine rotor blades 30 in this way expands when passing between the turbine rotor blades 30, thus rotating the rotor disk 32 and the rotor shaft 31.

Furthermore, the exhaust gas guided to the gas outlet 36a is guided from the gas outlet 36a, which is provided in the form of an opening over the entire circumference in the rotation direction, to the inner circumferential side of the turbine nozzle 25 (into the space partitioned by the inner-circumference-side member 25a and the partition wall 42).

The exhaust gas guided to the inner circumferential side of the turbine nozzle 25 flows along the inner circumferential surface 42a of the partition wall 42 provided in the turbine nozzle 25. Because of this, the exhaust gas led out from the downstream side of the turbine nozzle 25 is guided to the inner circumferential side of the turbine rotor blades 30. The exhaust gas guided to the inner circumferential side of the turbine rotor blades 30 in this way expands when passing between the turbine rotor blades 30, thus rotating the rotor disk 32 and the rotor shaft 31.

As described above, the exhaust gas expands when passing between the turbine rotor blades 30, thus rotating the rotor disk 32 and the rotor shaft 31, which drives the compressor provided on the other end of the rotor shaft 31, thus compressing the air to be supplied to the internal combustion engine.

Note that the air to be compressed by the compressor is taken in through a filter (not shown), and the exhaust gas that has expanded at the turbine rotor blades 30 is guided to the gas-outlet guiding tube 29 and the gas-outlet casing 28, thus subsequently flowing out to the exterior.

In addition, for example, when the pressure of the air the compressor outputs (expels) or the pressure of the air to be supplied to the combustion chamber of the internal combustion engine is lower than 0.2 MPa (2 bar) in terms of absolute pressure, in other words, when the internal combustion engine is under low-load operation, the open/close valve 41 is set to the fully-closed state, and, when the pressure of the air the compressor outputs (expels) or the pressure of the air to be supplied to the combustion chamber of the internal combustion engine is equal to or greater than 0.2 MPa (2 bar) in terms of absolute pressure, in other words, when the internal combustion engine is under high-load operation, the open/close valve 41 is set to the fully-open state.

As described above, the turbocharger 10 according to this embodiment affords the following operational advantages.

In the turbine nozzle 25 of the turbo compressor 10 to which the exhaust gas exhausted from the internal combustion engine (not shown) is guided, the partition wall (partition member) 42 is provided at an intermediate position in the radial direction thereof, and the outer circumferential surface (outer circumferential side) 42b of this partition wall 42 is inclined toward the inner circumferential side of the turbine nozzle 25 from the upstream side toward the downstream side of the exhaust gas that is guided to the turbine nozzle 25. Because of this, the exhaust gas flowing in the turbine nozzle 25 on the radially outer side relative to the partition wall 42 is guided to the inner circumferential side of the turbine nozzle 25 along the outer circumferential surface 42b of the partition wall 42. By doing so, the exhaust gas led out from the turbine nozzle 25 can be guided to the entirety of the turbine rotor blades 30. Therefore, the turbine efficiency can be enhanced as compared to the case in which the outer circumferential surface 42b of the partition wall 42 is not inclined.

Furthermore, because the exhaust gas can be guided to the entirety of the turbine rotor blades 30, the vibrational stress can be reduced as compared with the case in which the outer circumferential surface 42b of the partition wall 42 is not inclined. Therefore, the reliability of the turbocharger 10 can be enhanced.

In this embodiment, the tapering angle of the outer circumferential surface 42b of the partition wall 42 has been described as being about 20°; however, the present invention is not limited thereto, and any angle may be used so long as the exhaust gas guided from the downstream side of the turbine nozzle 25 to the turbine rotor blades 30 is guided to the entirety of the turbine rotor blades 30.

In addition, in this embodiment, the outer circumferential surface 42b of the partition wall 42 in the nozzle ring has been described as having the tapered shape that is gradually inclined downward from the upstream side toward the downstream side of the turbine nozzle 25; however, the shape thereof may be any shape so long as the shape makes it possible to guide the exhaust gas that has passed through the turbine nozzle 25 toward the bases of the turbine rotor blades 30, even if the shape is such that the exhaust gas that flows toward the downstream side when the open/close valve 41 is closed is guided to the inner circumferential side of the turbine nozzle 25, for example, a conical surface or a curved surface.

Furthermore, although this embodiment has been described by using an axial turbine, the present invention can also be applied to rotating machines such as a centrifugal or diagonal-flow turbine, a power turbine, and so forth.

### {Reference Signs List}

- 10: turbocharger
- 25: turbine nozzle
- 30: turbine rotor blade
- 40: partition wall (partition member)
- 42b: outer circumferential side (outer circumferential surface)

## Claims

1. A turbocharger that compresses combustion air in an internal combustion engine and that force-feeds the high-density air into a combustion chamber of the internal combustion engine, the turbocharger comprising:
a turbine rotor blade that is rotationally driven by exhaust gas exhausted from the internal combustion engine; and
a turbine nozzle that guides the exhaust gas to the turbine rotor blade,
wherein the turbine nozzle has, at an intermediate position in the radial direction, a partition member that divides the turbine nozzle; and
an outer circumferential side of the partition member is inclined toward an inner circumferential side of the turbine nozzle from the upstream side toward the downstream side of the exhaust gas that is guided to the turbine nozzle.
